# EUROPEAN PATENT APPLICATION

(11) **EP 3 104 000 A1**
(43) Date of publication of application: **14.12.2016**
(21) Application number: 15290156.7
(22) Date of filing: 12.06.2015
(51) Int. Cl.: F03B 3/14, F03B 13/26

(54) **RUNNER FOR A TIDAL POWER PLANT AND TIDAL POWER PLANT COMPRISING SUCH A RUNNER**

(71) Applicant: ALSTOM Renewable Technologies, 38100 Grenoble (FR)
(72) Inventor: Bremond, Jacques, 38120 Saint-Egrève (FR); Bertea, Jean Francois, 07300 Saint Jean De Muzols (FR)
(74) Representative: Brannen, Joseph Waclaw

(57) **Abstract**

The invention relates to a runner (2) for a tidal power plant, comprising a hub body (4) provided with openings (40) for receiving blades (10), individual rotating means (8) for rotating each blade with respect to the hub body, around an axis (Y10) that is perpendicular to a rotation axis (X2) of the runner. The rotating means (8) include at least one linear servomotor (14) or an electric motor (22) capable of rotating a corresponding blade (10) independently of the other blades, over an angle superior or equal to 180° around its axis (Y10).

## Description

### TECHNICAL FIELD

The present invention concerns a runner for a tidal power plant and a tidal power plant comprising such a runner.

### BACKGROUND

As well known, tidal power plants are arranged to convert into electricity the energy of tides. To this end, a turbine housing is generally arranged between the sea and a lagoon basin and the turbine housing includes a bulb runner comprising a hub body provided with openings for receiving blades. The bulb runner is integral to a rotating shaft which cooperates with an electricity generator.

When the water level of the sea rises with respect to the level of the lagoon, water can start flowing through the turbine to produce energy. This corresponds to the direct mode. Similarly, as the sea level starts to fall, the tidal head can be created by holding water back in the lagoon until a sufficient head is formed. Thus, the process can be reversed and the water flows in the opposite direction from the lagoon to the sea through the turbine. This corresponds to a reverse mode. In this way, generation of electricity is maximized, as it occurs with the flow of water in both directions.

In order to ensure an acceptable efficiency in both senses, it is known to orient each blade with respect to the hub body depending on the selected operating mode, that is in direct mode or in reverse mode.

A known system for achieving that goal consists in a large linear servomotor that extends within the hub body parallel to a rotation axis of the runner. A moving part of the large linear servomotor is connected to a blade lever of each blade by means of connecting rods. Therefore, the servomotor enables rotating all of the blades in a synchronized manner. However, the servomotor is designed for providing a maximum rotation of 150° about a rotation axis of the blade. As a result, the orientation of the blades in reverse mode is not satisfying and involves a significant decrease of efficiency.

### SUMMARY OF THE INVENTION

It is an object of the present invention to solve the aforementioned technical problem by providing a runner for a tidal power plant having blades that can work efficiently in both operating modes.

To that end, the invention concerns runner for a tidal power plant, comprising a hub body provided with openings for receiving blades, individual rotating means for rotating each blade with respect to the hub body, around an axis that is perpendicular to a rotation axis of the runner. According to the invention, the rotating means include at least one linear servomotor or an electric motor capable of rotating a corresponding blade independently of the other blades, over an angle superior or equal to 180° around its axis.

Thanks to the invention, when switching in reverse mode, the blades can be oriented for benefiting as much as possible from hydraulic energy. Consequently, the yield of the turbine is preserved In reverse mode. Further, the rotating means used for rotating each blade are more compact than the large linear servomotor of the prior art. The diameter of the hub body is then smaller than that of a prior art runner hub body. The flow rate of water flowing around a runner according to the invention is then increased with respect to the flow rate flowing around a prior art runner. Thus, the tidal power plant according to the invention is more powerful.

Further aspects of the runner which are advantageous but not compulsory are specified below:
- The blade includes a blade airfoil arranged on an external side of the hub body and a blade lever that is arranged on an internal side of the hub body and that is fixed to the blade airfoil, and the blade airfoil bears against the outer surface of the hub body and the blade lever bears against the inner surface of the hub body.
- The rotating means include two linear servomotors for each blade, each linear servomotor having a fixed part which is fixed with respect to the hub body and a moving part, and two rods for each blade, the rods connecting the blade with the moving parts of the two servomotors.
- The rods are connected to the blade lever.
- The rods are articulated at both ends, respectively on the end of the linear servomotor moving part and on the blade.
- The rotating moans include one linear servomotor for each blade, each linear servomotor having a fixed part which is fixed with respect to the hub body and a moving part, and a rack which is fixed to the moving part of the linear servomotor and which engages a geared pinion that is fixed with respect to the blade and that is centred on the rotation axis of the blade.
- Each linear servomotor extends parallel to the rotation axis of the runner.
- The moving part of each linear servomotor is a piston moving inside a housing forming the fixed part.
- The rotating means include a motor and a geared pinion for each blade.
- The geared pinion is fixed with respect to the blade lever and centred on its rotation axis.
- The runner further includes a locking mechanism for blocking the orientation of the blades in two angular operative positions.
- The locking mechanism includes a retractable locking pin mounted on the hub body.
- The locking pin is configured to engage a recess formed in the blade lever for blocking the rotation of the blade.
- The locking mechanism includes means for moving the locking pin between a releasing position and a locking position

The invention also concerns a tidal power plant comprising a runner as previously defined.

The invention will now be explained in correspondence with the figures, and as an illustrative example, without restricting the object of the invention. In the figures:
- figure 1 is a section of runner for a tidal power plant, according to a first embodiment of the invention,
- figure 2 is a section according to line II-II of figure 1, wherein blades of the runner are oriented in direct mode configuration,
- figure 3 is a section similar to figure 2, wherein blades are oriented In reverse mode configuration,
- figure 4 is a section similar to figure 2 representing a runner according to a second embodiment of the invention, and
- figure 5 is a section similar to figure 4, representing a runner according to a third embodiment of the invention.

### DETAILED DESCRIPTION OF THE INVENTION

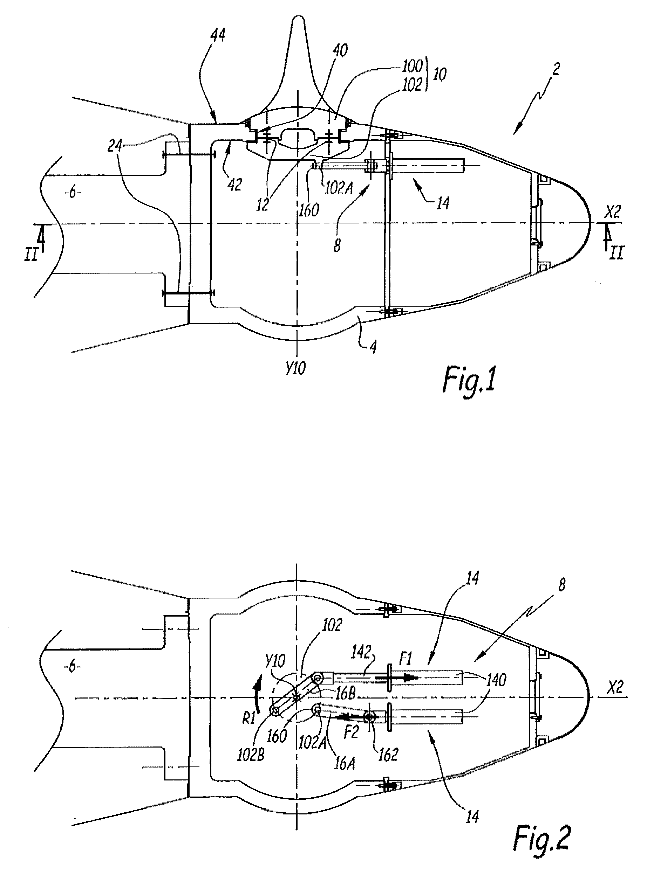

Figures 1 to 3 represent a runner 2 for a tidal power plant. For the clarity of the drawings, runner 2 is not hatched on the figures.

The tidal power plant, which is not represented in the example, is positioned between the sea and a lagoon basin. Depending on the tidal level, water may flow from the sea to the lagoon basin, which corresponds to a direct mode, or reversely, from the lagoon basin to the sea, which corresponds to a reverse mode,

Runner 2 is a bulb runner, suitable for being fitted into a bulb turbine. Runner 2 is designed for rotating around a central axis X2 that is parallel to the streamflow. Axis X2 is generally horizontal or slightly inclined with respect to horizontal direction. Runner 2 includes a hub body 4 that is hollow and that is secured to a rotating shaft 6. In the example, bolts 24 are used to attach hub body 4 to shaft 6. Shaft 6 is further coupled with a non-represented electricity generator for converting the mechanical energy arising from the rotation of runner 2 into electricity. As it can be seen on figure 1, hub body 4 is hollow and includes radial openings 40 for receiving blades 10. Hub body 4 includes an internal wall 42 and an external wall 44. Hub body 4 is filled with air.

Each blade 10 includes an airfoil portion 100 arranged on the external side of the hub body 4 and a lever portion 102 that is arranged on the internal side of the hub body 4 and that is fixed to the blade airfoil 100. In the example, bolts 12 are used to attach lever portion 102 to the airfoil portion 100. Blade airfoil 100 bears against the outer wall 44 of the hub body 4 and blade lever 102 bears against the inner wall 42 of the hub body 4. Therefore, hub body 4 is sandwiched between blade airfoil 100 and blade lever 102. Each blade 10 is movable around an axis Y10 that is perpendicular to axis X2, in particular radial to axis X2. In other words, axis Y10 intersects axis X2. A bearing bush is interposed, radially with respect to axis Y10, between blade 10 and the wall of opening 40.

Runner 2 further includes individual rotating means 8 for rotating a corresponding blade 10 around axis Y10, with respect to the hub body 4. Rotating means 8 enable rotating the corresponding blade 10 Independently of the other blades, over an angle around axis Y10 that is superior or equal to 180°. Individual rotating servomotors are excluded from the rotating means, as they require a lot of maintenance work and are subjected to fluid leakage. A rotating servomotor includes an internal cylinder arranged within a casing. The internal cylinder includes a protruding rib delimiting on both sides two chambers. The injection of fluid in one or other of the two chambers enables rotating the internal cylinder in the desired direction.

In the embodiment represented on figures 1 to 3, rotating means 8 include two linear servomotors 14 for each blade 10, each linear servomotor 14 having a fixed part 140 which Is fixed with respect to the hub body 4 and a moving part 142. Rotating means 8 further include two rods 16 for each blade 10. The two linear servomotors 14 extend parallel to the rotation axis X2 of runner 2. The moving part 142 of each linear servomotor 14 is a piston moving inside a housing forming the fixed part 140.

Rods 16A and 16B connect the blade lever 102 with the moving parts 142 of the two linear servomotors 14. Connecting rods 16 are articulated at both ends around axes parallel to the rotation axis Y10 of the blade 10. More precisely, a first end 160 of each rod 16A and 16B is articulated with blade fever 102, while a second end 162 is articulated at the end of a piston 142. The end 160 of rod 16A is hinged around a pin 102A of blade lever 102 and the end 160 of rod 16B is hinged around another pin 102B of blade lever 102.

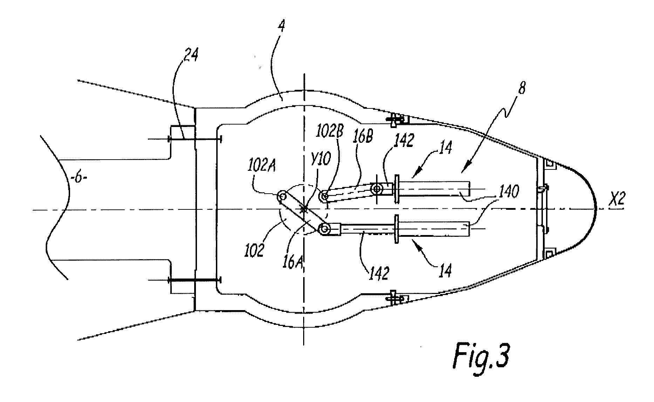

The orientation of the blades 10 for switching from direct mode to reverse mode is described here-below in relation to figures 2 and 3. Figure 2 represents a configuration wherein the blades 10 are oriented for direct mode. As the sea level starts to fall, a tidal head can be created by holding water back in the lagoon basin until a sufficient head is formed. Thus, the process can be reversed and the water flows in the opposite direction from the lagoon basin to the sea through the turbine. As a result, it is necessary to orient the blades 10 with respect to the streamflow direction.

The orientation of the blades 10 for switching in reverse mode or in direct mode is operated while the bulb turbine is not running. The tidal power plant is then equipped with means for closing the passageway between the sea and the lagoon basin. In a preferred embodiment, the bulb turbine includes a mobile distributor and the passageway between the sea and the lagoon basin is closed by the wicket gates of the distributor. However, the tidal power plant includes two stoplogs for dewatering the turbine in order to proceed with maintenance oporationc.

Alternatively, the bulb turbine includes a fixed distributor. The tidal power plant then includes a gate for closing the passageway between the sea and the lagoon basin and two stoplogs for dewatering the turbine.) In the preferred embodiment, the wicket gates of the distributor are closed when switching in direct mode or in reverse mode so that no water flows around the runner 2 while blades 10 are rotated. Thus, the means 8 for rotating the blades 10 are not oversized to compensate hydraulic forces.

Each blade 10 is oriented by retracting the piston 142 of the first servomotor 14, as represented by arrow F1, and by extending piston 142 of the second servomotor 14, as represented by arrow F2. These opposite motions mutual motions enable rotating blade lever 102 around axis Y10 through links 16A and 16B, as evidenced by arrow R1.

As it can be seen by comparing figures 2 and 3, the piston strokes of pistons 142 enable pivoting blade lever 102 over an angle that can be superior to 180°. In the illustrated embodiment, this angle is about 180°. This is more visible when comparing the position of pin 102A or 1028 in figures 2 and 3. The rotation R1 is then sufficient to obtain an optimal orientation of the blades 10 both in direct mode and in reverse mode.

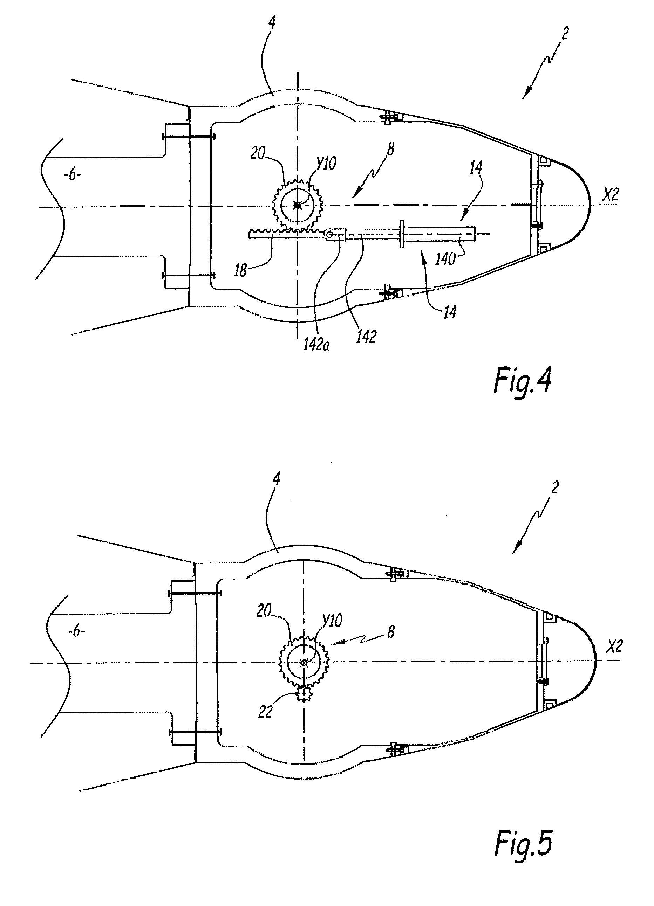

Figures 4 and 5 represent a runner 2 for a tidal power plant, respectively according to a second and to a third embodiment of the invention. For conciseness purpose, only the differences with respect to the first embodiment are mentioned here-below. Further, components similar to that of the first embodiment keep their numerical references, while the other components have other numerical references.

In the second embodiment, rotating means 8 includes only one linear servomotor 14 for each blade 10. This linear servomotor 14 includes a piston 52 designed for moving inside a housing 140 that is fixed with respect to the hub body 4. Rotating means 8 further include a rack 18 which is fixed at one extremity 142a of piston 142. Rack 18 prolongs then the piston 142 parallel to axis X2. Rack 18 engages a geared pinion 20 that is fixed with respect to the blade 10. In particular, geared pinion 20 is fixed with respect to blade lever 102 and centered on axis Y10. As a result, the linear displacement of piston 142 with respect to housing 140 Involves the geared pinion 20 to rotate around axis Y10. The length of roole 18 together with tho picton ctroko of picton 143 incido housing 140 are calculated so that the blade 10 can be rotated around axis Y10 over an angle at least superior to 180°.

In a non-represented alternative embodiment, rack 18 is integral with piston 142.

In the third embodiment, rotating means 8 for rotating each blade 10 include an electric motor 22 and a geared opinion 20 for each blade 10. More precisely, the output shaft of motor 22 engages geared pinion 20 that is fixed with respect to the blade 10 and centered on axis Y10.

In the illustrated embodiments, the runner 2 further includes a non-represented locking mechanism for each blade 10. This locking mechanism is reversible and enables locking the orientation of a corresponding blade 10 under operating conditions, that is in two angular operative positions, respectively in direct mode and in reverse mode. In the example, this locking mechanism includes a retractable locking pin mounted on hub body 4 and means for moving locking pin from its locking position, wherein it engages a recess formed in blade lever 102, and its releasing position, wherein it is disengaged from that recess. The means for moving the locking pin comprise two chambers. The injection of fluid in one or other of the two chambers allows engaging the locking pin into the recess or disengaging the locking pin from the recess. When the locking pin is engaged in the recess, it prevents blade 10 from rotating around axis Y10. One active chamber may be replaced by an elastic spring.

The locking mechanism supports centrifugal force and hydraulic forces applied on the blades 10 under operating conditions. As a result, the forces exerted on the rotating means 8 are limited.

In a non-represented alternative embodiment of the invention, other fixing means can be used to attach blade airfoil 100 and blade lever 102. In particular, blade lever 102 can be welded with blade airfoil 100.

In another non-represented alternative embodiment, the inner part of hub body 2 is filled with oil or water.

According to another non-represented alternative embodiment, the means 8 for rotating a corresponding blade 10 include an electric motor and a worm gear powered by the electric motor. The geared pinion of that system is also fixed with respect to the blade 10 and is centred on its rotation axis Y10. This particular embodiment has the advantage that the worm gear is not reversible. As a result, no locking mechanism is needed to block the orientation of the corresponding blade under operating conditions.

The technical features of the different embodiments and alternative embodiments of the invention described here-above can be combined together to generate new embodiments of the invention.

## Claims

1. Runner (2) for a tidal power plant, comprising:
- a hub body (4) provided with openings (40) for receiving blades (10),
- individual rotating means (8) for rotating each-blade with respect to the hub body, around an axis (Y10) that Is perpendicular to a rotation axis (X2) of the runner,
**characterized in that** the rotating means (8) include at least one linear servomotor (14) or an electric motor (22) capable of rotating a corresponding blade (10) independently of the other blades, over an angle superior or equal to 180° around its axis (Y10).

2. Runner according to claim 1, **characterized in that**
- the blade (10) includes a blade airfoil (100) arranged on an external side of the hub body (4) and a blade lever (102) that is arranged on an internal side of the hub body and that is fixed to the blade airfoil, and
- the blade airfoil (100) bears against the outer surface (44) of the hub body and the blade lever (102) bears against the inner surface (42) of the hub body.

3. Runner according to claim 1 or 2, **characterized in that** the rotating means (8) include:
- two linear servomotors (14) for each blade (10), each linear servomotor having a fixed part (140) which is fixed with respect to the hub body (4) and a moving part (142),
- two rods (16A, 16B) for each blade, the rods connecting the blade with the moving parts (142) of the two servomotors.

4. Runner according to claims 2 and 3, **characterized in that** the rods (16A, 16B) are connected to the blade lever (102).

5. Runner according to claim 3 or 4, **characterized in that** the rods (16A, 16B) are articulated at both ends (160. 162), respectively on the end of the linear servomotor moving part (142) and on the blade.

6. Runner according to claim 1 or 2, **characterized in that** the rotating means (8) include:
- one linear servomotor (14) for each blade, each linear servomotor having a fixed part (140) which is fixed with respect to the hub body (4) and a moving part,
- a rack (18) which is fixed to the moving part (142) of the linear servomotor and which engages a geared pinion (20) that is fixed with respect to the blade and that is centred on the rotation axis (Y10) of the blade.

7. Runner according to any claim 3 to 6, **characterized in that** each linear servomotor (14) extends parallel to the rotation axis (X2) of the runner.

8. Runner according to any claim 3 to 7, **characterized in that** the moving part of each linear servomotor is a piston (142) moving inside a housing (140) forming the fixed part.

9. Runner according to claim 1, **characterized in that** the rotating means (8) include a motor (22) and a geared pinion (20) for each blade (10).

10. Runner according to claim 2 and 9, **characterized in that** the geared pinion (20) is fixed with respect to the blade lever (102) and centered on its rotation axis (Y10).

11. Runner according to any previous claim, **characterized in that** the runner further includes a locking mechanism for blocking the orientation of the blades (10) in two angular operative positions.

12. Runner according to claim 11, **characterized in that** the locking mechanism includes a retractable locking pin mounted on the hub body (4).

13. Runner according to claims 2 and 12, **characterized in that** the locking pin is configured to engage a recess formed in the blade lever (102) for blocking the rotation of the blade (10).

14. Runner according to claim 12, **characterized in that** the locking mechanism includes means for moving the locking pin between a releasing position and a locking position.

15. Tidal power plant, comprising a runner (2) according to any previous claim.
